# EUROPEAN PATENT SPECIFICATION

(11) **EP 1 733 514 B1**
(45) Date of publication and mention of the grant of the patent: **04.03.2009**
(21) Application number: 03785728.1
(22) Date of filing: 28.11.2003
(51) Int. Cl.: H04L 12/56

(54) **METHOD, NETWORK CONTROLLER AND TELECOMMUNICATIONS UNIT FOR HANDLING DATA TRAFFIC IN A TELECOMMUNICATIONS NETWORK.**
VERFAHREN, NETZSTEUERUNGS- UND TELEKOMMUNIKATIONSEINHEIT ZUR BEHANDLUNG VON DATENVERKEHR IN EINEM TELEKOMMUNIKATIONSNETZ.
PROCEDE, CONTROLEUR DE RESEAU, ET UNITE DE TELECOMMUNICATIONS POUR LE TRAITEMENT DU TRAFIC DE DONNEES DANS UN RESEAU DE TELECOMMUNICATIONS

(43) Date of publication of application: 20.12.2006
(73) Proprietor: TELEFONAKTIEBOLAGET LM ERICSSON (publ), 164 83 Stockholm (SE)
(72) Inventor: Kruithof, Jacobus Martinus, NL-4822 VJ Breda (NL); De Kraker, Jacco Fini, NL-4824 GK Breda (NL)
(74) Representative: Dohmen, Johannes Maria Gerardus
(86) International application number: PCT/EP2003/013675
(87) International publication number: WO 2005/055528

(56) References cited:
- EP-A- 1 077 557
- EP-A- 1 278 390
- EP-A- 1 318 689
- EP-A- 1 345 377
- WO-A-03/043275

## Description

### Field of the Invention

The present invention relates generally to a method of handling data traffic in a telecommunications network, and more specifically to a method of handling data traffic from an originating unit to a destination unit in a telecommunications network comprising a network controller, wherein said traffic is assigned by a user of at least one of said units as low priority traffic, said method comprising the steps of: providing a request for permission of said network controller for transmission of said traffic by said originating unit; said network controller determining a current traffic load status of said network, wherein said current traffic load status is marked as low traffic load status if the current traffic load of said network is below a threshold value; said network controller providing a permission signal for performing transmission of said low priority traffic when said current traffic load status indicates a low traffic load; and said request is maintained by said network controller.

The invention relates further to a network controller and telecommunications unit for use with a method as described above.

### Background of the Invention

A method as described above is for example disclosed in European Patent application nr. EP-A-1273390, which is related to an information delivery method.

Telecommunications networks, such as data based networks, are often designed to be able to handle all of the traffic all of the time. Since the amount of traffic provided to the network is largely variable over time, networks are often capable to handle peak traffic during busy hours of the day. As a result, most of the network capacity is left unused outside these busy hours, for instance at night or in the weekends.

However, although telecommunications networks are designed to handle all of the traffic all the time, due to the often bursty nature of traffic load on the network, it may still occasionally occur that the available network resources are temporarily insufficient to handle all of the data traffic during large traffic peaks. This may lead to delays in traffic delivery and may even cause errors and retransmissions of traffic due to these errors. These retransmissions, in turn, increase the traffic load on the network.

Telecommunications service providers often attempt to alleviate these problems by implementing a tariff structure for handling traffic, wherein traffic during peak hours is charged more than traffic during off-peak hours. As a result, users of the telecommunications network will prefer to use the network during off-peak hours, such that overall, less traffic is supplied to the network during peak hours. Therefor, by implementing the tariff structure as describe above, the telecommunications service provider is able to level the supply of traffic over the course of the day, and is therefor able to dimension the network more efficiently.

Although this tariff structure may alleviate the problems of traffic supply to some extend, it still provides a number of disadvantages. For instance, the tariff structure does not take into account that certain parts of the network may be better sized to the supply of traffic than other parts of het network. In other words, since the supply of traffic is dependent on geographic location as well, not all of the network is busy during peak hours. There may be parts of the network where the network resources are still more than sufficient to handle all of the traffic all of the day. Therefor, in one part of the network, traffic may fail to be delivered due to lack of capacity, while in other parts of the network sufficient capacity is available and is left idle.

Another disadvantage is that due to the often bursty nature of traffic in telecommunications networks, it may often occur that during peak hours from time to time there is hardly any traffic on the network, while on the other hand during off-peak hours from time to time there are large amounts of traffic on the network. In other words, although the tariff structure spreads the supply of traffic to some extend, due to bursty nature of traffic in telecommunication networks the amount of traffic offered is still largely variable over time. Efficiently sizing the telecommunications network, using a conventional tariff structure, is therefor still challenging.

### Summary of the Invention

It is an object of the present invention to provide a method of handling data traffic in a telecommunications network, which alleviates the above-mentioned problems, and enables a telecommunications service provider to be able to more efficiently dimension the network resources in a telecommunications network.

This object is achieved by the present invention in that it provides a method of handling data traffic from an originating unit to a destination unit in a telecommunications network comprising a network controller, wherein said traffic is assigned by a user of at least one of said originating unit or said destination unit as low priority traffic, said method comprising the steps of requesting permission of said network controller for transmission of said traffic by said originating unit, said network controller determining a current traffic load status of said network, wherein said current traffic load status is marked a low traffic load if the current traffic load of said network is below a threshold value, said network controller providing a permission signal for performing transmission of said low priority traffic when said current traffic load status indicates a low traffic load; and said request is maintained by said network controller at least until providing said permission signal.

A method as described above provides the advantage that part of the traffic is assigned as low priority traffic, and for this part of the traffic, the network controller is enabled to manage the supply of low priority traffic over time. In other words the network controller may decide, depending on the current traffic load on the network, when to handle the low priority traffic most conveniently. Therefore, a traffic handling method according to the present invention will enable the network controller to take into account the actual current traffic load status on the network, and therefore enables the network controller to handle the traffic dependent on the location in the network and dependent on the actual situation at a specific moment in time. Therefore, low priority traffic may still be sent through one part of the network, while other parts of the network may be congested or may experience heavy traffic load.

Since the user decides which traffic is low priority traffic and which traffic is regular traffic, the user is always able to send urgent or time critical data traffic at any point in time. In exchange for assigning part of this traffic as low priority traffic, the user may for instance be charged less for low priority traffic than for regular priority traffic.

It will be understood that the current traffic load status may indicate a low or high traffic load status for any part of the network or the network as a whole. The current traffic load status whereupon the decision for allowing low priority traffic is made, may be related to network antenna's, base stations, network nodes or hubs, interconnections with other networks, transmission lines, or any other entity in the network that may form a bottleneck at any moment in time, with respect to network resources.

Another advantage is that since the request is maintained by the network controller at least until providing the permission signal, it is not necessary for the originating unit or destination unit to use a trial and an error method of contacting the network controller and requesting permission for transmitting the data traffic. Such a conventional trial and error method unnecessarily loads the network controller with processing traffic requests.

The permission signal may either be sent by the network controller to the originating unit, or on the other hand to the destination unit (or both). In case the permission signal is sent to the originating unit, the originating unit may, in accordance with an embodiment, upon receiving the permission signal send all or part of the available low priority traffic stored in a memory of said originating unit to the network controller.

In a preferred embodiment, the low priority traffic is temporarily stored by the originating unit until the originating unit receives the permission signal.

On the other hand, if the permission signal is sent to the destination unit, the destination unit may send a data request to the originating unit for sending the data traffic. This may provide benefits, in that the destination unit may, for instance, be enabled to reconsider the receiving of the earlier announced or requested data stream, for instance because the destination unit may be busy at the moment the permission signal is received.

In an embodiment of the present invention, the permission signal comprises a signal indicating low traffic load on the network. This signal may be used as a trigger to the unit receiving the permission signal (either the destination or originating unit) for performing an action such as sending the low priority data onto the network (by an originating unit) or sending a data request to the originating unit (by a destination unit).

In another embodiment of the present invention, the permission signal comprises a polling signal from the network controller, wherein the originating unit is polled for the availability of low priority traffic. In return, for instance, the originating unit may send an indication of the amount of low priority traffic waiting to be send, and indication of the type of low priority traffic to be send (such as the service to which it is related), etc. Off course the originating unit may also send the low priority traffic. This embodiment provides some additional means for traffic management by said network controller, for instance, polling units in a preferred order, managing the traffic handling dependent on the information provided by the unit, etc.

In another embodiment the permission signal is sent periodically during low traffic load on the network. By periodically providing said permission signal, it is not necessary for the originating unit to request permission each time the originating unit has new traffic to be send. Permission may be requested once, for instance at the beginning of a session.

According another embodiment of the present invention, said originating unit sends at least part of the low priority traffic to said network controller together with said permission request, and wherein said part of the low priority traffic is stored by said network controller at least until providing said permission signal. The permission signal then functions as a trigger for transmitting the low priority traffic further through the network.

The method may for instance be used for handling data traffic between the telecommunications unit and for instance an application gateway, wherein said application gateway is arranged for providing data based services through said network, in accordance with an embodiment. The user of the telecommunications network may determine the conditions under which traffic is assigned as low priority traffic, and these conditions may for instance be known to the application gateway.

There is a number of possibilities that may be used by the user for determining whether traffic is to be assigned as low priority traffic or not.

In accordance with an embodiment, the traffic is assigned as low priority traffic dependent on a type of service or application corresponding to the data traffic. A user may for instance decide that all his or her e-mails are to be regarded as low priority traffic, while for instance data traffic related to surfing on the World Wide Web is to be regarded as regular traffic.

In accordance with an another embodiment, the traffic may be assigned as low priority traffic dependent on the time, such as the time of the day, the date or the day of the week. A user may for instance decide that all traffic sent between 9:00 AM and 6:00 PM is to be regarded as low priority traffic, whilst traffic sent outside these hours is to be considered as regular traffic, enabling a user to make use of a lower tariff during business peak hours (wherein normally the full charge must be paid). On the other hand, the user may decide that traffic to be send on working days (Monday through Friday) is to be regarded as low priority traffic. The user may also decide that traffic to be send on holidays is to be regarded as regular traffic while all other traffic is to be regarded as low priority traffic.

In another embodiment traffic, is assigned as low priority traffic for a limited amount of time. A user may for instance determine that traffic may be considered as low priority traffic for the next three hours, but after these three hours the traffic must be handled by the network controller. This may be beneficial, for instance, in a case wherein the user wants to send a message to another user, telling him or her that he will not be able to attend an appointment later that day. The message must be delivered at least two hours before the appointment in order to enable the other user to change his or her plans.

Traffic may, in accordance with an embodiment, also be assigned as low priority traffic dependent on a geographic location of the originating (or destination) unit. If the originating unit, for instance, is a mobile telecommunications unit carried by the user, said user may choose to assign at least part of the traffic sent from said mobile unit as low priority traffic at locations where the network resources are limited (for instance remote locations), or at locations where a lot of traffic is expected to enter the network (for instance at busy railway stations).

In another embodiment, wherein the originating unit comprises a memory for storing said low priority traffic, said traffic is assigned as low priority traffic dependent on the amount of available memory. A user may decide that traffic is assigned low priority traffic until the memory is almost full, after which all additional traffic is regarded as regular traffic.

In another embodiment, said unit comprises a memory for storing low priority traffic and said stored low priority traffic is assigned regular traffic and is sent to the network controller after the amount of stored low priority traffic exceeds a threshold. After sending the low priority traffic (and clearing the memory) the memory is available again for new low priority traffic.

In yet another embodiment the user of at least one of said originating unit or destination unit assigns the unit as a low priority unit, and all traffic originating from said low priority unit or destined for said low priority unit is automatically assigned as low priority traffic.

In this case, the user does not have to specify the conditions under which the traffic is to be regarded as low priority traffic, and he or she is guaranteed the most economic tariff all the time.

In a second aspect of the present invention, there is provided a telecommunications unit for use in a method according to the present invention, said unit comprising means for sending data traffic onto a telecommunications network, means for receiving data traffic from said network, means for receiving input from a user of said unit, means for assigning, based on said input from said user, traffic to be send from said unit or traffic to be send to said unit as low priority traffic, and means for storing said low priority traffic, wherein said means for sending are arranged for sending low priority traffic to a network controller in said telecommunications network upon receiving a permission signal from said network controller.

In a third aspect of the present invention there is provided a network controller for use with a method according to the present invention, said network controller being arranged handling data traffic between units in a telecommunications network, comprising means for receiving a permission request from an originating unit for transmitting low priority data traffic to said network controller, means for determining a current traffic load of said network and comparing said traffic load to a threshold for providing a current traffic load status, and means for providing a permission signal to said originating unit for performing transmission of said low priority traffic from said originating unit when said current traffic load status indicates low traffic load on said network based on said threshold, said network controller being further arranged for maintaining said request at least until providing said permission signal.

The present invention will now be further elucidated by a description and drawings referring to a preferred embodiment thereof, directed to the handling of traffic by a network controller in a mobile telecommunications network. The invention is not limited to the embodiments disclosed, which are provided for explanatory purposes only.

### Brief description of the drawings

Figure 1 illustrates a telecommunications network wherein a method according to the present invention may be used.
Figure 2 schematically illustrates a method according to an embodiment of the present invention.
Figure 3 schematically illustrates a method according to another embodiment of the present invention.
Figure 4 schematically illustrates a method according to another embodiment of the present invention.

### Detailed description of the drawings

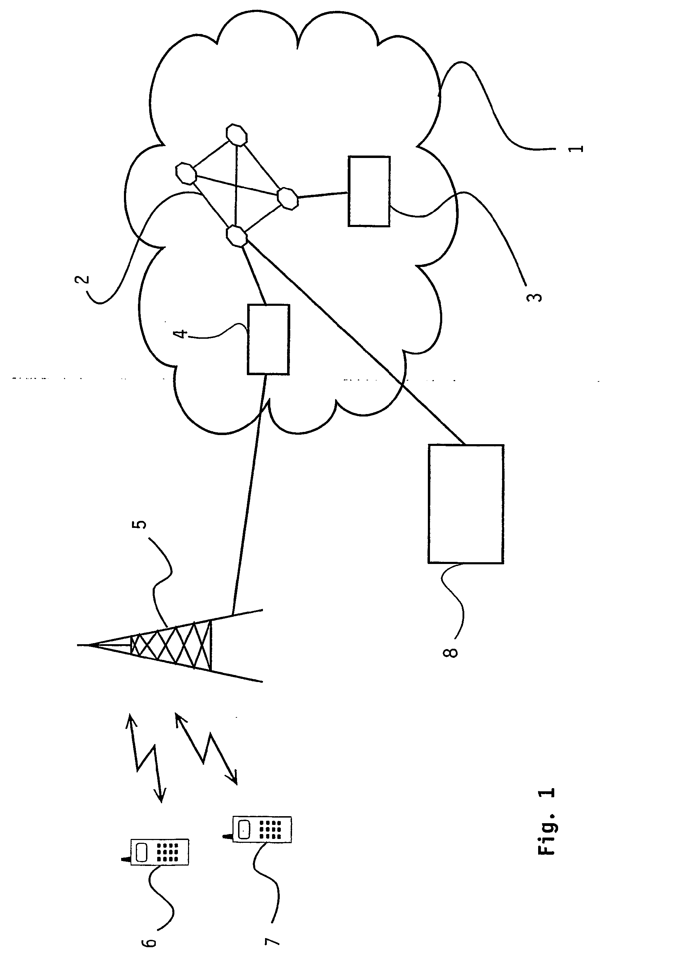

Figure 1 shows a telecommunications network 1, comprising a physical network 2 and a plurality of network controllers 3 and 4. A mobile antenna 5 is connected to the network controller 4. An application server 8, providing services to users connected to the network 1, may be connected directly to a node in the network 2. A plurality of users are using the telecommunications network through a plurality of terminal units 6 and 7 connecting through a mobile connection to antenna 5 for establishing a communicative connection with network controller 4. Regular traffic between, for instance, mobile unit 6 and application server 8 may for instance be sent from mobile unit 6 to antenna 5, from where it is forwarded to network controller 4. The network controller 4, which is the first intelligent piece of equipment in the network receiving the traffic, finds out where to send the traffic, and forwards the traffic to application server or application gateway 8.

During busy hours, parts of the network or the network equipment, may have to process so much traffic, that part of the traffic is delayed or must be dropped. This may result in retransmission of data increasing the load on the network even more.

A user may therefor opt to assign his or her data traffic as low priority traffic. Such an assignment enables the network controller to handle the traffic differently, and to be able to manage the supply of at least the low priority part of the traffic independently.

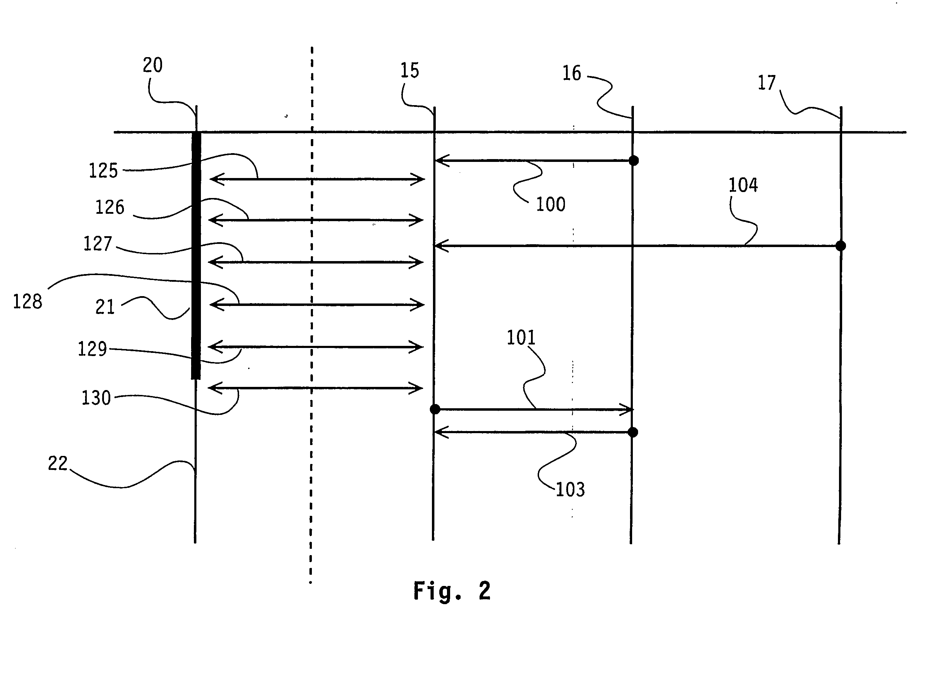

This may be achieved by the network controller using a method as schematically illustrated in figure 2. In figure 2, line number 15 denotes a time line for a network controller, 16 refers to a first terminal unit and 17 refers to a second terminal unit. Both terminal units 16 and 17 will try to send traffic onto the network via network controller 15, however the traffic sent by terminal unit 16 is assigned as low priority traffic, while the traffic to be send by terminal unit 17 is data traffic having a regular priority. The line with reference sign 20, on the left side of the dotted line in figure 2, shows the current traffic load status on the network (and is not a physical entity but reflects a parameter status over time). The lines 15, 16, 17 and 20 are time lines, where the time increases from the top of figure 2 to the bottom. The arrows in the horizontal direction between lines 15, 16 and 17 may be regarded as method steps denoting the exchange of signals between the various elements in the network (network controller 15 and first and second terminal unit 16 and 17). The fat part 21 of time line 20 related to the current traffic load status, denotes a high traffic load on the network. The thin part 22 of line 20, denotes a regular or low traffic load on the network.

In step 100, terminal unit 16 sends a request for permission to network controller 15, in order to get permission to send low priority data traffic to network controller 15. Network controller 15, upon receiving the permission request, starts to check the current traffic load status on the network periodically in steps 125, 126, 127, 128, 129 and 130. In steps 125, 126, 127, 128 and 129, the traffic load on the network is still high, and the network controller will park the permission request without taking action at that moment. In step 130 the network controller 15 finds out that the current traffic load status on the network indicates a regular or low load on the network and a permission signal is sent to terminal unit 16 in step 101. Upon receiving the permission signal, terminal unit 16 will send the low priority data traffic to network controller 15 in step 103.

It is noted here, that although in this embodiment it is the network controller performing the actual step of measurement the traffic load and comparing said traffic load to a threshold for determining whether or not the current traffic load is high or low, this actual measurement and comparison may be performed by dedicated traffic measurement means. Said network controller may determine the current traffic load status by requesting or receiving the current traffic load status from said dedicated traffic measurement means.

In the mean time, right after step 100, wherein terminal unit 16 has sent his permission request to network controller 15, terminal unit 17, in step 104, sends regular traffic to network controller 15 without sending a request first. Network controller 15 will try to send the traffic from terminal unit 17 through the network, even though the current traffic load status is high. Note that the traffic sent by regular unit 17 is assigned as regular priority traffic.

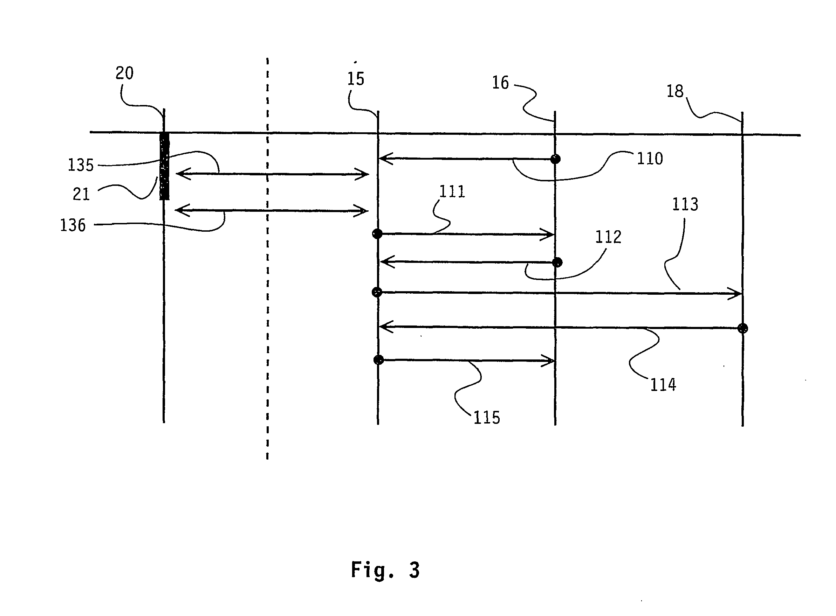

Figure 3 shows another embodiment of the present invention. Note that simular reference numbers refer to simular elements in the drawings. Time line 20 again represents the current traffic load status on the network. Time line 15 is the network controller, time line 16 is related to a first terminal unit and time line 18 is related to a application gateway or application server.

In step 110, terminal unit 16 sends a permission request for receiving low priority data traffic from application server 18. Network controller 15 checks in step 135 wether the current traffic load status allows low priority traffic. Since the current traffic load status indicates a high traffic load, the request is parked and no action is taken by network controller 15. In step 136, network controller 15 finds out that the current traffic load status on the network indicates a regular or low traffic load. Network controller 15 than sends a permission signal to terminal unit 16 in step 111. Upon receiving the permission signal, terminal unit 16 sends a data request in step 112 to network controller 15, and said data request is forwarded in step 113 to application gateway 18. Application gateway 18 sends the data traffic destined for terminal unit 16 to network controller 15 in step 114. Upon receiving the data traffic, network controller 15 forwards the data traffic to destination terminal unit 16 in step 115.

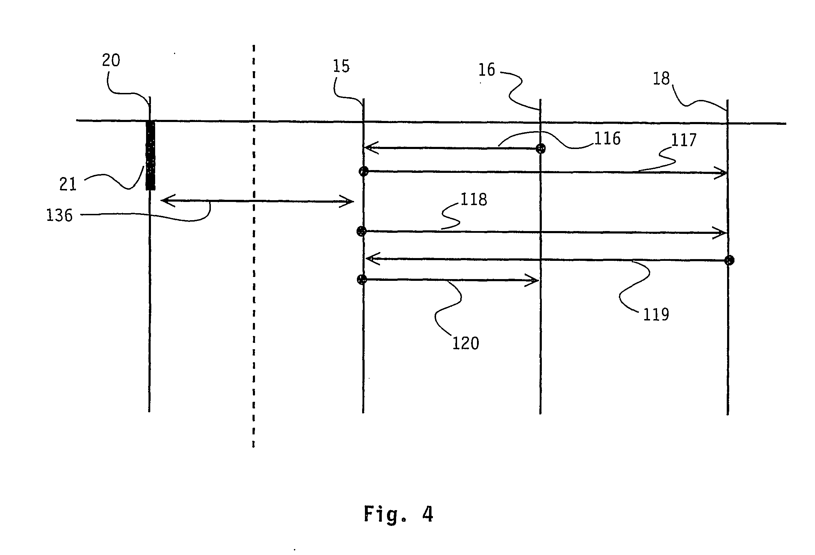

In figure 4 shows an alternative embodiment of the present invention, wherein destination terminal unit 16 send a data request in step 116 for requesting data from application gateway 18, to network controller 15. Said network controller interprets the data request destined for the application gateway as a permission request for transmission of low priority traffic from said application gateway. In step 117, said data request is forwarded by the network controller 15 to the application gateway 18. Again in step 136, said network controller determines a low traffic load status on said network, upon which , in step 118, the permission signal is transmitted to the application gateway. Upon receiving the permission signal, said application gateway 18 sends the requested low priority data traffic to the network controller 15 in step 119, which forwards the traffic to the terminal unit 16 in step 120. It will be appreciated that either one of steps 116 and 117 may be transmitted to the network controller after step 136.

Note that as long as the low priority data traffic is not sent by application gateway 18 in figures 3 and 4 or by terminal unit 16 in figure 2, this low priority data traffic may be stored temporarily in the terminal unit or application gateway. These telecommunications units (terminal unit 16 and/or application gateway or application server 18) therefor comprise a memory or other storage facility for temporarily storing low priority data traffic until a permission signal is received.

The permission signal sent in steps 101 in figure 2, in step 111 in figure 3 and in step 118 in figure 4, may comprise a signal indicating to the unit a low traffic load on the network, or may, according to another embodiment, comprise a polling signal for polling the telecommunication units for the availability of low priority data. In this latter case, the telecommunications unit only has to send a permission request once, after which the network controller will poll the telecommunications unit for instance periodically for the availability of (new) low priority traffic in case of low load.

As described earlier, a user of the telecommunications unit may specify the conditions under which traffic is considered low priority traffic. These conditions may be dependent on time, such as a certain time limit for which the traffic is assigned as low priority traffic, or a time of the day or day of the week. Alternatively these conditions may be dependent on the availability of memory in the telecommunications unit, the type of traffic to be send or receive, the geographic location of the originating or destination unit, or any other parameter of interest.

For the purpose of comprehensiveness, it is noted here that numerous modifications and variations of the present invention are possible in the light of the above teachings. It is therefor understood that, within the scope of the amended claims, the invention may be practised otherwise than as specifically described herein.

## Claims

1. Method of handling data traffic from an originating unit (6) to a destination unit (8) in a telecommunications network (2) comprising a network controller (4), wherein said traffic is assigned by a user of at least one of said units (6,8) as low priority traffic, said method comprising the steps of:
said originating unit (6) providing a request for permission of said network controller (4) for transmission of said traffic by said originating unit (6);
said network controller (4) determining a current traffic load status of said network (2), wherein said current traffic load status is marked as low traffic load status if the current traffic load of said network (2) is below a threshold value;
said network controller (4) providing a permission signal to said originating unit for performing transmission of said low priority traffic when said current traffic load status indicates a low traffic load; and
wherein said request is maintained by said network controller (4) at least until providing said permission signal.

2. Method according to claim 1, wherein said permission signal is provided dependent on the location of said traffic in the network.

3. Method according to claim 1, wherein upon receiving said permission signal, said originating unit (6) transmits said low priority traffic to said network controller (4).

4. Method according to any of the previous claims, wherein said low priority traffic is temporarily stored by said originating unit (6) until said originating unit (6) receives said permission signal.

5. Method according to any of the previous claims, wherein said permission signal comprises a signal indicating said low traffic load status.

6. Method according to any of the previous claims, wherein said permission signal comprises a polling signal from said network controller (4) wherein said originating unit (6) is polled for the availability of low priority traffic.

7. Method according to any of the previous claims, wherein said permission signal is sent periodically during low traffic load on said network (2).

8. Method according to any of the previous claims, wherein using said permission signal, said network controller (4) issues sending of said low priority traffic by said originating unit (6).

9. Method according to any of the previous claims, wherein said originating unit (6) sends at least part of the low priority traffic to said network controller (4) together with said permission request, and wherein said part of the low priority traffic is stored by said network controller (4) at least until providing said permission signal.

10. Method according to any of the previous claims, wherein at least one of said originating unit (6) or destination unit (8) is an application gateway arranged for providing data based services through said network (2).

11. Method according to any of the previous claims, wherein at least one of said originating unit (6) or said destination unit (8) is a customer terminal unit arranged for delivering services to said user.

12. Method according to any of the previous claims, wherein said traffic is assigned as low priority traffic for a limited amount of time.

13. Method according to any of the previous claims, wherein said traffic is assigned as low priority traffic dependent on the time, such as the time of the day, the date or the day of the week.

14. Method according to any of the previous claims, wherein said traffic is assigned as low priority traffic dependent on a type of service or application corresponding to said data traffic.

15. Method according to any of the previous claims, wherein said traffic is assigned as low priority traffic dependent on a geographic location of at least one of said originating unit (6) or said destination.

16. Method according to any of the previous claims, wherein said originating unit (6) comprises a memory for storing said low priority traffic, and wherein said traffic is assigned as low priority traffic dependent on the amount of available memory.

17. Method according to any of the previous claims, wherein said originating unit (6) comprises a memory for storing said low priority traffic, and wherein said stored low priority traffic is assigned regular traffic and is sent to the network controller (4) after the amount of stored low priority traffic exceeds a threshold.

18. Method according to any of the previous claims, wherein a user of at least one of said originating unit (6) or destination unit (8) assigns said unit (6,8) as a low priority unit (6,8), and wherein traffic originating from said low priority unit (6,8) or destined for said low priority unit (6,8) is automatically assigned low priority traffic.

19. Telecommunications unit (6,8) for use in a method according to any of the previous claims as an originating (6) or destination unit (8), said unit (6,8) comprising means for sending data traffic onto a telecommunications network (2), means for receiving data traffic from said network (2), means for receiving input from a user of said unit (6,8), means for assigning, based on said input from said user, traffic to be sent from said unit (6,8) or traffic to be sent to said unit (6,8) as low priority traffic, and means for storing said low priority traffic, **characterized in that**, said unit (6,8) further comprises means for providing a request for permission of a network controller (4) for transmission of data traffic, wherein said request is maintained by said network controller at least until providing a permision signal, and wherein said means for sending are arranged for sending low priority traffic to a network controller (4) in said telecommunications network (2) upon receiving by said unit (6,8) from said network controller (4) a permission signal for transmission of said low priority traffic when a current traffic load of said network (2) is below a threshold value.

20. Telecommunications unit (6,8) according to claim 19, further comprising means for providing a response signal to said network (2) in response to receiving said permission signal, said response signal indicating availability of stored low priority traffic in said means for storing.

21. Telecommunications unit (6,8) according to any of the claims 19 or 20, wherein said telecommunications unit (6,8) forms at least one of a group comprising an application gateway and a customer terminal unit such as a mobile telecommunications unit, a personal digital assistant (PDA) or personal computer.

22. Network controller (4) for use with a method according to any of the claims 1-18, said network controller (4) being arranged for handling data traffic between units (6,8) in a telecommunications network (2), comprising means for receiving a permission request from an originating unit (6) for transmitting low priority data traffic to said network controller (4), means for determining a current traffic load of said network (2) and comparing said traffic load to a threshold for providing a current traffic load status, and means for providing a permission signal to said originating unit (6) for performing transmission of said low priority traffic from said originating unit (6) when said current traffic load status indicates low traffic load on said network (2) based on said threshold, said network controller (4) being further arranged for maintaining said request, **characterized in that** said network controller (4) is arranged for maintaining said request at least until providing said permission signal.

23. Network controller (4) according to claim 22, wherein said units (6,8) in said network (2) are arranged for storing low priority traffic, and wherein said permission signal sent by said network controller (4) comprises a polling signal for polling said units (6,8) for low priority traffic stored in said units (6,8).

24. Network controller (4) according to any of the claims 22 and 23, wherein said network controller (4) is arranged for sending said permission signal periodically during low traffic load on said network (2).

## Patentansprüche

1. Verfahren zur Verarbeitung von datenverkehr von einer Ursprungseinheit (6) zu einer Zieleinheit (8) in einem Telekommunikationsnetzwerk (2) mit einem Netzwerksteuergerät (4), wobei der Verkehr durch einen Benutzer von zumindest einer der Einheiten (6, 8) als Niedrigprioritätsverkehr zugeordnet wird, wobei das Verfahren die Schritte umfasst:
Bereitstellen durch die Ursprungseinheit (6) einer Anfrage nach einer Erlaubnis des Netzwerksteuergerätes (4) zur Übertragung des Verkehrs von der Ursprungseinheit (6);
Bestimmen durch das Netzwerksteuergerät (4) eines gegenwärtigen Verkehrslastzustandes des Netzwerkes (2), wobei der gegenwärtige Verkehrslastzustand als ein niedriger Verkehrslastzustand markiert wird, falls die gegenwärtige Verkehrslast des Netzwerkes (2) unter einem Schwellwert liegt;
Bereitstellen durch das Netzwerksteuergerät (4) eines Erlaubnissignals an die Ursprungseinheit zum Durchführen einer Übertragung des Niedrigprioritätsverkehrs, wenn der gegenwärtige Verkehrslastzustand eine niedrige Verkehrslast anzeigt; und
wobei die Anfrage von dem Netzwerksteuergerät (4) zumindest bis zum Bereitstellen eines Erlaubnissignals aufrechterhalten wird.

2. Verfahren nach Anspruch 1, wobei das Erlaubnissignal in Abhängigkeit des Ortes des Verkehrs in dem Netzwerk bereitgestellt wird.

3. Verfahren nach Anspruch 1, wobei auf Empfangen des Erlaubnissignals hin die Ursprungseinheit (6) den Niedrigprioritätsverkehr an das Netzwerksteuergerät (4) überträgt.

4. Verfahren nach einem der vorangehenden Ansprüche, wobei der Niedrigprioritätsverkehr temporär von der Ursprungseinheit (6) gespeichert wird, bis die Ursprungseinheit (6) das Erlaubnissignal empfängt.

5. Verfahren nach einem der vorangehenden Ansprüche, wobei das Erlaubnissignal ein Signal umfasst, das einen niedrigen Verkehrslastzustand anzeigt.

6. Verfahren nach einem der vorangehenden Ansprüche, wobei das Erlaubnissignal ein abfragendes Signal von dem Netzwerksteuergerät (4) umfasst, wobei die Ursprungseinheit (6) nach der Verfügbarkeit von Niedrigprioritätsverkehr abgefragt wird.

7. Verfahren nach einem der vorangehenden Ansprüche, wobei das Erlaubnissignal periodisch während einer niedrigen Verkehrslast auf dem Netzwerk (2) gesendet wird.

8. Verfahren nach einem der vorangehenden Ansprüche, wobei unter Verwendung des Erlaubnissignals das Netzwerksteuergerät (4) ein Senden von Niedrigprioritätsverkehr durch die Ursprungseinheit (6) ausgibt.

9. Verfahren nach einem der vorangehenden Ansprüche, wobei die Ursprungseinheit (6) zumindest einen Teil des Niedrigprioritätsverkehrs an das Netzwerksteuergerät (4) zusammen mit der Erlaubnisanfrage sendet und wobei der Teil des Niedrigprioritätsverkehrs von dem Netzwerksteuergerät (4) zumindest bis zum Bereitstellen des Erlaubnissignals gespeichert wird.

10. Verfahren nach einem der vorangehenden Ansprüche, wobei zumindest eine der Ursprungseinheit (6) oder Zieleinheit (8) ein Anwendungsgateway ist, das zum Bereitstellen von Daten-basierten Diensten über das Netzwerk (2) angeordnet ist.

11. Verfahren nach einem der vorangehenden Ansprüche, wobei zumindest eine der Ursprungseinheit (6) oder der Zieleinheit (8) eine Kundenendeinheit ist, die zum Liefern von Diensten an den Benutzer angeordnet ist.

12. Verfahren nach einem der vorangehenden Ansprüche, wobei der Verkehr als Niedrigprioritätsverkehr für einen begrenzten Zeitbetrag zugeordnet wird.

13. Verfahren nach einem der vorangehenden Ansprüche, wobei der Verkehr als Niedrigprioritätsverkehr in Abhängigkeit der Zeit zugeordnet wird, wie zum Beispiel der Tageszeit, dem Datum oder dem Wochentag.

14. Verfahren nach einem der vorangehenden Ansprüche, wobei der Verkehr als Niedrigprioritätsverkehr in Abhängigkeit eines Typs eines Dienstes oder einer Anwendung entsprechend dem Datenverkehr zugeordnet wird.

15. Verfahren nach einem der vorangehenden Ansprüche, wobei der Verkehr als Niedrigprioritätsverkehr in Abhängigkeit eines geografischen Ortes zumindest einer der Ursprungseinheit (6) oder des Zieles zugeordnet wird.

16. Verfahren nach einem der vorangehenden Ansprüche, wobei die Ursprungseinheit (6) einen Speicher zum Speichern des Niedrigprioritätsverkehrs umfasst und wobei der Verkehr als Niedrigprioritätsverkehr in Abhängigkeit der verfügbaren Speichermenge zugeordnet wird.

17. Verfahren nach einem der vorangehenden Ansprüche, wobei die Ursprungseinheit (6) einen Speicher zum Speichern des Niedrigprioritätsverkehrs umfasst und wobei dem gespeicherten Niedrigprioritätsverkehr ein Regulärverkehr zugeordnet wird und an das Netzwerksteuergerät (4) gesendet wird, nachdem der Betrag von gespeichertem Niedrigprioritätsverkehr eine Schwelle überschreitet.

18. Verfahren nach einem der vorangehenden Ansprüche, wobei ein Benutzer von zumindest einer der Ursprungseinheit (6) oder Zieleinheit (8) die Einheit (6, 8) als eine Niedrigprioritätseinheit (6, 8) zuordnet und wobei ein Verkehr, der von der Niedrigprioritätseinheit (6, 8) stammt oder an die Niedrigprioritätseinheit (6, 8) gerichtet ist, automatisch Niedrigprioritätsverkehr zugeordnet wird.

19. Telekommunikationseinheit (6, 8) zur Verwendung in einem Verfahren gemäß einem der vorangehenden Ansprüche als eine Ursprungs- (6) oder Zieleinheit (8), wobei die Einheit (6, 8) eine Vorrichtung zum Senden von Datenverkehr auf einem Telekommunikationsnetzwerk (2), eine Vorrichtung zum Empfangen von Datenverkehr von dem Netzwerk (2), eine Vorrichtung zum Empfangen von einer Eingabe von einem Benutzer der Einheit (6, 8), eine Vorrichtung zum Zuordnen basierend auf der Eingabe von dem Benutzer von Verkehr, der von der Einheit (6, 8) gespendet werden soll, oder von Verkehr, der zu der Einheit (6, 8) gesendet werden soll, als Niedrigprioritätsverkehr und eine Vorrichtung zum Speichern des Niedrigprioritätsverkehrs umfasst, **dadurch gekennzeichnet, dass** die Einheit (6, 8) weiter eine Vorrichtung zum Bereitstellen einer Anfrage nach einer Erlaubnis eines Netzwerksteuergerätes (4) zur Übertragung eines datenverkehrs umfasst, wobei die Anfrage von dem Netzwerksteuergerät zumindest bis zum Bereitstellen eines Erlaubnissignals aufrechterhalten wird und wobei die Vorrichtung zum Senden von Niedrigprioritätsverkehr zu einem Netzwerksteuergerät (4) in dem Telekommunikationsnetzwerk (2) auf Empfangen durch die Einheit (6, 8) von dem Netzwerksteuergerät (4) eines Erlaubnissignals zur Übertragung des Niedrigprioritätsverkehrs hin angeordnet ist, wenn eine gegenwärtige Verkehrslast des Netzwerkes (2) unter einem Schwellenwert liegt.

20. Telekommunikationseinheit (6, 8) nach Anspruch 19, weiter mit einer Vorrichtung zum Bereitstellen eines Antwortsignals an das Netzwerk (2) in Reaktion auf Empfangen des Erlaubnissignals, wobei das Antwortsignal die Verfügbarkeit von gespeichertem Niedrigprioritätsverkehr in der Vorrichtung zum Speichern anzeigt.

21. Telekommunikationseinheit (6, 8) nach einem der Ansprüche 19 oder 20, wobei die Telekommunikationseinheit (6, 8) zumindest eine Gruppe bildet, die ein Anwendungsgateway und eine Kundenendeinheit umfasst, wie zum Beispiel eine Mobiltelekommunikationseinheit, einen persönlichen, digitalen Assistenten (PDA) oder einen Personal Computer.

22. Netzwerksteuergerät (4) zur Verwendung mit einem Verfahren nach einem der Ansprüche 1 bis 18, wobei das Netzwerksteuergerät (4) zum Handhaben von Datenverkehr zwischen Einheiten (6, 8) in einem Telekommunikationsnetzwerk (2) angeordnet ist, mit einer Vorrichtung zum Empfangen einer Erlaubnisanfrage von einer Ursprungseinheit (6) zum Übertragen von Niedrigprioritätsdatenverkehr an das Netzwerksteuergerät (4), einer Vorrichtung zum Bestimmen einer gegenwärtigen Verkehrslast des Netzwerkes (2) und Vergleichen der Verkehrslast mit einer Schwelle zum Bereitstellen eines gegenwärtigen Verkehrslastzustandes, und einer Vorrichtung zum Bereitstellen eines Erlaubnissignals an die Ursprungseinheit (6) zum Durchführen einer Übertragung des Niedrigprioritätsverkehrs von der Ursprungseinheit (6), wenn der gegenwärtige Verkehrslastzustand eine niedrige Verkehrslast auf dem Netzwerk (2) basierend auf der Schwelle anzeigt, wobei das Netzwerksteuergerät (4) weiter angeordnet zum Aufrechterhalten der Anfrage ist, **dadurch gekennzeichnet, dass** das Netzwerksteuergerät (4) angeordnet zum Aufrechterhalten der Anfrage zumindest bis zum Bereitstellen des Erlaubnissignals angeordnet ist.

23. Netzwerksteuergerät (4) nach Anspruch 22, wobei die Einheiten (6, 8) in dem Netzwerk (2) zum Speichern von Niedrigprioritätsverkehr angeordnet sind, und wobei das Erlaubnissignal, das von dem Netzwerksteuergerät (4) gesendet wird, ein abfragendes Signal zum Abfragen der Einheiten (6, 8) nach Niedrigprioritätsverkehr umfasst, der in den Einheiten (6, 8) gespeichert ist.

24. Netzwerksteuergerät (4) nach einem der Ansprüche 22 und 23, wobei das Netzwerksteuergerät (4) angeordnet ist zum Senden des Erlaubnissignals periodisch während einer niedrigen Verkehrslast auf dem Netzwerk (2).

## Revendications

1. Procédé de traitement d'un trafic de données d'une unité d'origine (6) à une unité de destination (8) dans un réseau (2) de télécommunications comportant un contrôleur (4) de réseau, dans lequel ledit trafic est affecté par un utilisateur d'au moins l'une desdites unités (6, 8) en tant que trafic à basse priorité, ledit procédé comprenant les étapes dans lesquelles :
ladite unité d'origine (6) fournit une demande de permission dudit contrôleur (4) de réseau pour une émission dudit trafic par ladite unité d'origine (6) ;
ledit contrôleur (4) de réseau détermine un état de charge de trafic en cours dudit réseau (2), dans lequel ledit état de charge de trafic en cours est marqué en tant qu'état de charge de trafic bas si la charge de trafic en cours dudit réseau (2) est en dessous d'une valeur de seuil ;
ledit contrôleur (4) de réseau fournit un signal de permission à ladite unité d'origine pour effectuer une émission dudit trafic de basse priorité lorsque ledit état de charge de trafic en cours indique une charge de trafic basse ; et
dans lequel ladite demande est maintenue par ledit contrôleur (4) de réseau au moins jusqu'à la fourniture dudit signal d'émission.

2. Procédé selon la revendication 1, dans lequel ledit signal d'émission est fourni en fonction de la position dudit trafic dans le réseau.

3. Procédé selon la revendication 1, dans lequel, à la réception dudit signal de permission, ladite unité d'origine (6) transmet ledit trafic de basse priorité audit contrôleur (4) de réseau.

4. Procédé selon l'une quelconque des revendications précédentes, dans lequel ledit trafic de basse priorité est stocké temporairement par ladite unité d'origine (6) jusqu'à ce que ladite unité d'origine (6) reçoive ledit signal de permission.

5. Procédé selon l'une quelconque des revendications précédentes, dans lequel ledit signal de permission comprend un signal indiquant ledit état de charge de trafic bas.

6. Procédé selon l'une quelconque des revendications précédentes, dans lequel ledit signal de permission comprend un signal d'interrogation provenant dudit contrôleur (4) de réseau, dans lequel ladite unité d'origine (6) est interrogée sur la disponibilité d'un trafic de basse priorité.

7. Procédé selon l'une quelconque des revendications précédentes, dans lequel ledit signal de permission est envoyé périodiquement pendant une charge de trafic bas sur ledit réseau (2).

8. Procédé selon l'une quelconque des revendications précédentes, dans lequel, en utilisant ledit signal de permission, ledit contrôleur (4) de réseau délivre un envoi dudit signal de priorité basse par ladite unité d'origine (6).

9. Procédé selon l'une quelconque des revendications précédentes, dans lequel ladite unité d'origine (6) envoie au moins une partie du trafic de priorité basse audit contrôleur (4) de réseau en même temps que ladite demande de permission, et dans lequel ladite partie du trafic de priorité basse est stockée par ledit contrôleur (4) de réseau au moins jusqu'à la fourniture dudit signal de permission.

10. Procédé selon l'une quelconque des revendications précédentes, dans lequel au moins l'une de ladite unité d'origine (6) et de ladite unité de destination (8) est une passerelle d'application agencée pour fournir des services basés sur des données par l'intermédiaire dudit réseau (2).

11. Procédé selon l'une quelconque des revendications précédentes, dans lequel au moins l'une de ladite unité d'origine (6) et de ladite unité de destination (8) est une unité terminale de client agencée pour délivrer des services audit utilisateur.

12. Procédé selon l'une quelconque des revendications précédentes, dans lequel ledit trafic est affecté en tant que trafic de basse priorité pendant une grandeur de temps limitée.

13. Procédé selon l'une quelconque des revendications précédentes, dans lequel ledit trafic est affecté en tant que trafic à basse priorité suivant le temps, tel que l'heure du jour, la date ou le jour de la semaine.

14. Procédé selon l'une quelconque des revendications précédentes, dans lequel ledit trafic est affecté en tant que trafic à basse priorité suivant un type de service ou d'application correspondant audit trafic de données.

15. Procédé selon l'une quelconque des revendications précédentes, dans lequel ledit trafic est affecté en tant que trafic de basse priorité suivant un emplacement géographique d'au moins l'une de ladite unité d'origine (6) et de ladite destination.

16. Procédé selon l'une quelconque des revendications précédentes, dans lequel ladite unité d'origine (6) comporte une mémoire destinée à stocker ledit trafic de priorité basse, et dans lequel ledit trafic est affecté en tant que trafic de basse priorité en fonction de la quantité de mémoire disponible.

17. Procédé selon l'une quelconque des revendications précédentes, dans lequel ladite unité d'origine (6) comporte une mémoire destinée à stocker ledit trafic de priorité basse, et dans lequel ledit trafic de priorité basse stocké est affecté comme trafic régulier et est envoyé au contrôleur (4) de réseau après que la quantité de trafic de priorité basse stocké a dépassé un seuil.

18. Procédé selon l'une quelconque des revendications précédentes, dans lequel un utilisateur d'au moins l'une de ladite unité d'origine (6) et de ladite unité de destination (8) affecte ladite unité (6, 8) en tant qu'unité à basse priorité (6,8), et dans lequel le trafic ayant pour origine ladite unité à basse priorité (6, 8) ou destiné à ladite unité à basse priorité (6, 8) est affecté automatiquement comme trafic de basse priorité.

19. Unité (6, 8) de télécommunications destinée à être utilisée dans un procédé selon l'une quelconque des revendications précédentes comme unité d'origine (6) ou de destination (8), ladite unité (6, 8) comportant des moyens destinés à envoyer un trafic de données sur un réseau (2) de télécommunications, des moyens destinés à recevoir un trafic de données depuis ledit réseau (2), des moyens destinés à recevoir un signal d'entrée provenant d'un utilisateur de ladite unité (6, 8), des moyens destinés à affecter, sur la base dudit signal d'entrée provenant dudit utilisateur, un trafic devant être envoyé depuis ladite unité (6, 8) ou un trafic devant être envoyé à ladite unité (6, 8) comme trafic à basse priorité, et des moyens destinés à stocker ledit trafic à basse priorité, **caractérisé en ce que** ladite unité (6, 8) comporte en outre des moyens destinés à fournir une demande de permission d'un contrôleur (4) de réseau pour émettre un trafic de données, où ladite demande est maintenue par ledit contrôleur de réseau au moins jusqu'à la fourniture d'un signal de permission, et dans laquelle lesdits moyens d'envoi sont agencés pour envoyer un trafic à basse priorité à un contrôleur (4) de réseau dans ledit réseau (2) de télécommunications à la réception par ladite unité (6, 8), depuis ledit contrôleur (4) de réseau, d'un signal de permission pour une émission dudit trafic à basse priorité lorsqu'une charge de trafic en cours dudit réseau (2) est en dessous d'une valeur de seuil.

20. Unité (6, 8) de télécommunications selon la revendication 19, comportant en outre des moyens destinés à fournir un signal de réponse audit réseau (2) en réponse à la réception dudit signal de permission, ledit signal de réponse indiquant la disponibilité d'un trafic à basse priorité stocké dans lesdits moyens de stockage.

21. Unité (6, 8) de télécommunications selon l'une des revendications 19 et 20, laquelle unité (6, 8) de télécommunications forme au moins un groupe comprenant une passerelle d'application et une unité terminale de client telle qu'une unité mobile de télécommunications, un assistant personnel numérique (PDA) ou un ordinateur individuel.

22. Contrôleur (4) de réseau destiné à être utilisé avec un procédé selon l'une quelconque des revendications 1 à 18, ledit contrôleur (4) de réseau étant agencé pour traiter un trafic de données entre des unités (6, 8) dans un réseau (2) de télécommunications, comportant des moyens destinés à recevoir une demande de permission provenant d'une unité d'origine (6) pour transmettre un trafic de données à basse priorité audit contrôleur (4) de réseau, des moyens destinés à déterminer une charge de trafic en cours dudit réseau (2) et à comparer ladite charge de trafic à un seuil pour établir un état de charge de trafic en cours, et des moyens destinés à fournir un signal de permission à ladite unité d'origine (6) pour effectuer une émission dudit trafic de basse priorité depuis ladite unité d'origine (6) lorsque ledit état de charge de trafic en cours indique une charge de trafic basse sur ledit réseau (2) sur la base dudit seuil, ledit contrôleur (4) de réseau est en outre agencé pour maintenir ladite demande, **caractérisé en ce que** ledit contrôleur (4) de réseau est agencé pour maintenir ladite demande au moins jusqu'à la fourniture dudit signal de permission.

23. Contrôleur (4) de réseau selon la revendication 22, dans lequel lesdites unités (6, 8) dans ledit réseau (2) sont agencées pour stocker un trafic de basse priorité, et dans lequel ledit signal de permission envoyé par ledit contrôleur (4) de réseau comprend un signal d'interrogation pour interroger lesdites unités (6, 8) sur un trafic à basse priorité stocké dans lesdites unités (6, 8).

24. Contrôleur (4) de réseau selon l'une des revendications 22 et 23, lequel contrôleur (4) de réseau est agencé pour envoyer ledit signal de permission périodiquement pendant une charge de trafic basse sur ledit réseau (2).
